Europäisches Patentamt

European Patent Office

Office européen des brevets

(11) Veröffentlichungsnummer : **0 156 788**
**B1**

(12) **EUROPÄISCHE PATENTSCHRIFT**

(45) Veröffentlichungstag der Patentschrift :
07.09.88

(21) Anmeldenummer : 85890049.1

(22) Anmeldetag : 27.02.85

(51) Int. Cl.⁴ : **G 01 L 19/08**

(54) **Elektronischer Druckschreiber.**

(30) Priorität : 29.03.84 AT 1051/84

(43) Veröffentlichungstag der Anmeldung :
**02.10.85 Patentblatt 85/40**

(45) Bekanntmachung des Hinweises auf die Patenterteilung : **07.09.88 Patentblatt 88/36**

(84) Benannte Vertragsstaaten :
**CH DE FR GB IT LI NL SE**

(56) Entgegenhaltungen :
**EP-A- 0 123 729**
**DE-A- 2 915 682**
**DE-A- 3 318 714**
**US-A- 4 287 762**

(73) Patentinhaber : **Sprecher + Schuh Gesellschaft
m.b.H.**
**Franckstrasse 51**
**A-4020 Linz (AT)**

(72) Erfinder : **Wögerbauer, Johann**
**Steinbauerstrasse 7**
**A-4040 Linz (AT)**

(74) Vertreter : **Rossboth, Werner Heinz
c/o Sprecher + Schuh Gesellschaft m.b.H. Franckstrasse 51**
**A-4020 Linz (AT)**

Jouve, 18, rue St-Denis, 75001 Paris, France

## Beschreibung

Die Erfindung bezieht sich auf einen elektronischen Druckschreiber, insbesondere Atmosphären-Druckschreiber für die Verwendung auf Schiffen, mit einem an den Eingang eines Mikroprozessors angeschlossenen, druckäquivalente elektrische Impulse liefernden Geberelement.

Zwischen atmosphärischen Luftmengen, die unterschiedlichen Druck und unterschiedliche Temperatur aufweisen, findet bekanntlich ein Druckausgleich statt. Örtlich zu erwartende Windgeschwindigkeiten, Windrichtungen und Temperaturen der Atmosphäre sind daher aus dem Verlauf des atmosphärischen Druckes ableitbar.

Für die Wettervorhersage ist der atmosphärische Druck einer der wichtigsten Faktoren. Je rascher sich der atmosphärische Druck ändert, desto höher werden die örtlich zu erwartenden Windgeschwindigkeiten sein. Internationale Bestimmungen der Schiffahrt schreiben daher die atmosphärische Druckmessung und Eintragung im Logbuch in bestimmten Zeitintervallen vor.

Die gebräuchlichen Geräte zur Messung des atmosphärischen Druckes sind Barometer, welche entweder durch Verschiebung einer Flüssigkeitssäule oder durch Verformung einer elastischen Dose, sogenannte Aneroid-Barometer, den Druck anzeigen.

Auch elektronische Druckmeßgeräte mit digitaler Anzeige sind bekannt. Aus der DE-A-29 15 682 ist ein elektronisches Zeitmeßgerät bekannt, das mit einer Schaltung für die digitale Druck- oder Höhen-Anzeige auf einem Flüssigkristall-Display ausgerüstet ist. Der Drucksensor besteht aus zwei Quarz-Oszillatoren, wovon einer unmittelbar der Umgebungsluft ausgesetzt ist und seine Frequenz unter Druckschwankungen ändert. Die Schaltung ermöglicht neben der digitalen Anzeige auch eine Tendenzanzeige, bei der nach Vergleich der Druckwerte durch Symbole, z. B. Pfeile, Vorzeichen vor den Ziffern oder eine Lampe die steigende oder fallende Tendenz gezeigt wird.

Die US-A-3 924 464 beschreibt ein Aneroid-Barometer, welches die Druckrate, d. h. Druckänderung pro Zeiteinheit, mittels eines Zeigers angibt. Zur fortlaufenden Aufzeichnung atmosphärischer Druckänderungen sind Druckschreiber bekannt, die aus einem mit einem Schreibhebel verbundenen Aneroid-Barometer bestehen. Solche auch Barograph genannte Druckschreiber sind aber nur relativ aufwendig erschütterungsunempfindlich, wasserdicht und salzwasserbeständig ausführbar.

Der Einsatz eines Mikroprozessors bei der Druckmessung ist beispielsweise aus der US-A-4 395 915 bekannt, die ein Gerät beschreibt, mit dem auf Basis von piezoresistiven Drucksensoren sowohl der statische Druck, als auch der Differenzdruck einer Prozeßflüssigkeit, die durch ein Primärelement, beispielsweise eine Meßblende, Düse oder ein Venturirohr fließt, gemessen werden kann. Das Gerät beinhaltet einen Doppeldruckgeber-Übertrager für zwei unterschiedliche Drücke und gegebenenfalls einen Temperatursensor. Ein Mikroprozessor mit einem Speisekreis kann vorgesehen sein, um aus dem statischen Druck, Differenzdruck und der Temperatur den Mengenfluß der durch das Primärelement fließenden Prozeßflüssigkeit zu errechnen. Über einen Analogwandler kann an den Mikroprozessor ein Ablesegerät für die numerische Anzeige des Mengenflusses angeschlossen sein.

Durch die in der Folge aufgezeigte erfindungsgemäße Ausführung wird bezweckt, einen elektronischen Druckschreiber, insbesondere Atmosphären-Druckschreiber für die Verwendung auf Schiffen, zu schaffen, der erschütterungsunempfindlich und auf eine wirtschaftliche Art wasserdicht und salzwasserbeständig ausführbar ist, eine automatische Drucküberwachung, graphische Druckverlaufsdarstellung, freie Programmierbarkeit und optische und bzw. oder akustische Warneinrichtung für abnorme Druckänderungen ermöglicht sowie für zusätzliche Meß- und Anzeigefunktionen ausrüstbar ist.

Dies wird dadurch erreicht, daß der Mikroprozessor neben einer an sich bekannten Zeit-Einheit eine Speicher-Einheit aufweist, in der ein Kalender abgespeichert ist und die eine vorbestimmte Dauer die gemessenen Druckwerte speichert sowie ein zusätzliches Speichervermögen für beispielsweise geographische und bzw. oder meteorologische Daten besitzt, die Ausgänge des Mikroprozessors mit einen Flüssigkristall-Display zur digitalen Druckanzeige und graphischen Druckverlaufsdarstellung, sowie mit einer optischen und bzw. oder akustischen Warneinrichtung verbunden sind, welche anspricht, wenn die Druckrate des Druckabfalles einen vorbestimmten Wert zwischen 0,5 und 5 mb/Stunde übersteigt, und daß die Zeit-Einheit sowie die Speicher-Einheit vorzugsweise über Folientastelemente einstell- und bzw. oder abrufbar ist.

Sämtliche Elemente sind erschütterungsunempfindlich und ermöglichen in dieser Kombination eine kontinuierliche Druckanzeige und graphische Darstellung des Druckverlaufes bezogen auf die Zeiteinheit. Übersteigt die Druckrate einen bestimmten Wert, spricht die optische und bzw. oder akustische Warneinrichtung an.

Durch die Speicher-Einheit im Mikroprozessor ist der Druckverlauf eines vorbestimmten Zeitraumes abspeicher- und abrufbar. Zusätzliche Meß- und Anzeigefunktionen, beispielweise Temperaturverlauf, sind durch Anschluß weiterer Geberelemente erreichbar.

Ein Ausgang des Mikroprozessors kann mit einem Plotter zur Aufzeichnung des Druckverlaufes verbindbar sein, wodurch der Verlauf des atmosphärischen Druckes später bei ruhigen Wetterverhältnissen oder an Land auf Papier oder Folie aufgeschrieben und ausgewertet werden kann.

Ein erhöhter Schutz gegen Korrosion und bzw. oder mechanische Beschädigung sowie eine kompakte, einfach montierbare Ausführung können erreicht werden, wenn Geberelement, Mikroprozessor, Flüssigkristall-Display und Warneinrichtung in einem wasserdichten und salzwasserbeständigen Gehäuse angeordnet sind, das zum Aufstellen oder zur Befestigung an oder in einer Wand ausgeführt ist.

Bei einer bevorzugten Ausführung sind die Koordinaten der graphischen Druckverlaufsdarstellung durch am Gehäuse befindliche Folientastelemente veränderbar. Bestimmte Abschnitte der Druckverlaufsdarstellung sind dadurch genauer auswertbar und der elektronische Druckschreiber wird universeller, beispielsweise als Höhenmesser, einsetzbar.

Sofern ein Plotter zur Aufzeichnung des Druckverlaufes benützt wird, können dadurch außerdem die Zeitabschnitte des Druckverlaufes an die derzeit gebräuchliche Form der Registrierstreifen abgestimmt werden. Folientastelemente sind wasserdicht und daher für die Verwendung auf Schiffen gut geeignet.

Eine Weiterbildung der erfindungsgemäßen Ausführung ergibt sich, wenn das Flüssigkristall-Display eine digitale Anzeige jener Windgeschwindigkeit aufweist, die auf Grund des Druckverlaufes und der geographischen Breite des Meßortes zu erwarten ist.

Damit ist eine Präzisierung des Warnsignals erreichbar, wenn die Warneinrichtung auf Grund eines abnormen Druckabfalles anspricht.

Die geographischen Daten können dabei über die Folientastelemente eingegeben werden, wodurch der Mikroprozessor auf Grund einer in der Speicher-Einheit abgespeicherten Tabelle mit den jeweiligen Druckraten zugeordneten Windgeschwindigkeiten die für den Ort zu erwartende Windgeschwindigkeit ermitteln oder mit einer programmierten Formel für die Beziehung Druckrate-Windgeschwindigkeit errechnen kann.

Die Einsatzmöglichkeiten des elektronischen Druckschreibers können noch erweitert werden, wenn der Mikroprozessor und das Flüssigkristall-Display zusätzlich für die digitale Anzeige der Temperatur, tatsächlichen Windgeschwindigkeit, Windrichtung und Schiffsgeschwindigkeit ausgerüstet sind. Der Mikroprozessor weist dabei zusätzliche Ausgänge für den Anschluß der jeweiligen Geberelemente auf.

Zur digitalen Anzeige der geographischen Breite und Länge kann der Mikroprozessor und das Flüssigkristall-Display mit einem Navigationsgerät gekoppelt sein.

Aus den geographischen Daten und der Druckrate kann dadurch der Mikroprozessor die für den Ort zu erwartende Windgeschwindigkeit ermitteln und gleichzeitig bei einem abnormen Druckabfall anzeigen. Im folgenden wird an Hand der beiliegenden Zeichnung ein Ausführungsbeispiel des Erfindungsgegenstandes näher erläutert.

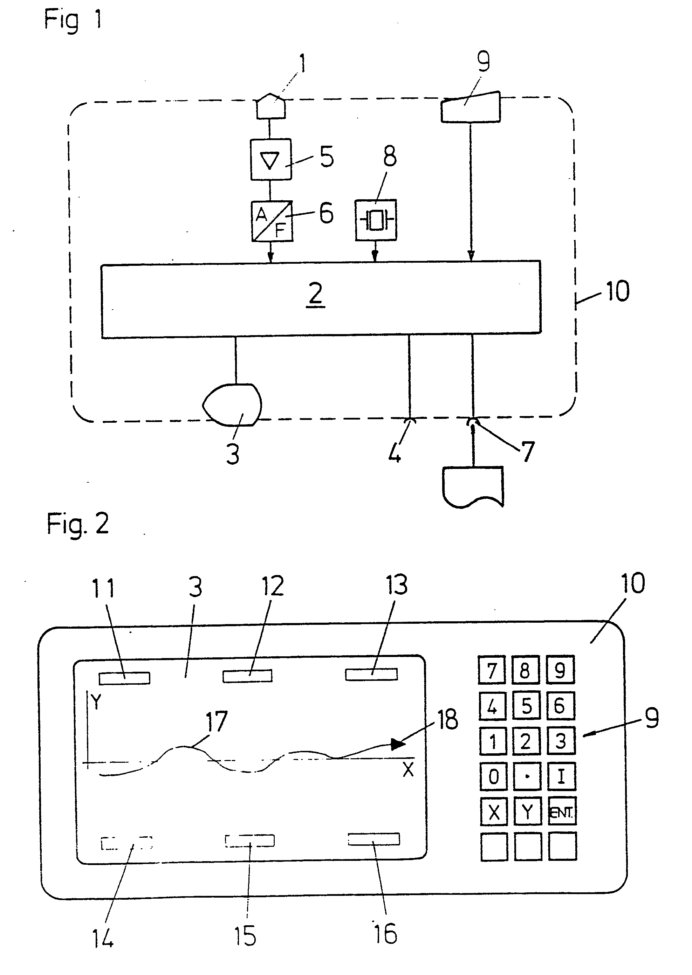

Es zeigen Fig. 1 das Blockdiagramm eines erfindungsgemäßen elektronischen Druckschreibers und Fig. 2 den Aufriß des in einem Gehäuse untergebrachten Druckschreibers gemäß Fig. 1 mit sichtbarem Flüssigkristall-Display und den Folientastelementen.

Aus dem in Fig. 1 dargestellten Blockdiagramm eines erfindungsgemäßen elektronischen Druckschreibers erkennt man, daß das druckäquivalente elektrische Spannungen liefernde Geberelement 1 über einen Vorverstärker 5 und Analog-Frequenzwandler 6 an den Eingang eines Mikroprozessors 2 angeschlossen ist. Das Geberelement 1 ist ein monolithischer piezoresistiver Druckwandler, es können aber auch andere Geberelemente Verwendung finden. Der Mikroprozessor 2 besitzt integrierte MOS-Schaltkreise, eine Speicher-Einheit und quarzgesteuerte Zeit-Einheit 8. Über Vorverstärker 5 und Analog-Frequenzwandler 6 werden die druckäquivalenten Spannungen in druckäquivalente Impulse umgewandelt.

Speicher- und Zeit-Einheit des Mikroprozessors 2 sind über Folientastelemente 9 einstell- und bzw. oder abrufbar.

Mit dem einen Ausgang des Mikroprozessors 2 ist ein Flüssigkristall-Display 3 verbunden. Die Druckverlaufsdarstellung in Form einer Kurve auf dem Flüssigkristall-Display 3 kommt dadurch zustande, daß die pro Zeiteinheit erfaßten druckäquivalenten Impulse im Mikroprozessor 2 aufgezählt, gespeichert und anschließend auf die Zeit- und Druckkoordinaten der zu aktivierenden Bildpunkte des Flüssigkristall-Displays 2 umgesetzt werden. Um eine möglichst hohe Darstellungsgenauigkeit des Druckverlaufes bei den vorhandenen Bildpunkten zu erreichen, wird bei der jeweils vorgewählten Zeitbasis, z. B. Druckverlauf über 12 Stunden, die Druckkoordinate automatisch auf die in diesem Zeitabschnitt maximal mögliche Druckschwankung gedehnt. Die Druckkoordinate umfaßt daher bezogen auf die vorgewählte Zeitbasis beispielsweise einen variablen Bereich des atmosphärischen Druckes von 10 bis 100 mb. Wird der elektronische Druckschreiber als Höhenmesser verwendet, erfolgt je nach Einsatzhöhe auch eine Verschiebung des Druckbereiches zu niedrigeren Grenzwerten des dargestellten Druckes.

An die Ausgänge 4 bzw. 7 des Mikroprozessors 2 sind eine optische und bzw. oder akustische Warneinrichtung bzw. ein Plotter zur Aufzeichnung des Druckverlaufes anschließbar.

Die durckäquivalenten elektrischen Impulse werden im Mikroprozessor 2 zeitbezogen zur digitalen Druckanzeige und graphischen Druckverlaufsdarstellung im Flüssigkristall-Display 3 umgesetzt und in der Speicher-Einheit mindestens 7 Tage lang gespeichert. In der Speicher-Einheit ist ein Kalender abgespeichert, sodaß im Flüssigkristall-Display 3 neben der Uhrzeit auch das Datum digital angezeigt werden kann.

Die an den Ausgang 4 des Mikroprozessors 2 angeschlossene optische und bzw. oder akustische Warneinrichtung spricht an, wenn die Druckrate, d. h. Druckänderung pro Zeiteinheit, einen bestimmten Wert überschreitet, wobei dieser Wert vorzugsweise zwischen 0,5 bis 5 mb/Stunde frei programmierbar ist. Der Ausgang 4 wird aktiviert, wenn die Druckdifferenz zwischen den minutenweise erfaßten Druckwerten und den Druckwerten vor einer Stunde einen vorbestimmten Grenzwert überschreitet. Die optische Warneinrichtung kann beispielsweise aus einem auf dem Flüssigkristall-Display 3 erscheinenden Warntext bestehen.

Mit Hilfe von in der Speicher-Einheit abgespeicherten meteorologischen Daten und Beziehungen kann der Mikroprozessor 2 die auf Grund der Druckrate und geographischen Breite des Meßortes zu erwartende Windgeschwindigkeit ermitteln und im Flüssigkristall-Display 3 digital anzeigen. Durch zusätzliche Geberelemente kann der elektronische Druckschreiber auch zur digitalen Anzeige der Temperatur, tatsächlichen Windgeschwindigkeit, Windrichtung und dgl. verwendet werden. Auch ein Einsatz beispielsweise als Temperaturschreiber ist bei entsprechender Adaptierung ohne weiteres denkbar.

Geberelement 1, Vorverstärker 5, Analog-Frequenzwandler 6, Mikroprozessor 2, Flüssigkristall-Display 3, Folientastelement 9 und eventuell auch die Warneinrichtung sind in einem wasserdichten und salzwasserbeständigen Gehäuse 10, in Fig. 1 strichliert gezeichnet, angeordnet, das zum Aufstellen oder zur Befestigung an einer Wand oder einbaubar ausgeführt ist.

In Fig. 2 ist die Vorderansicht des Gehäuses 10 eines elektronischen Atmosphären-Druckschreibers für die Verwendung auf Schiffen dargestellt. In der gezeichneten Anzeige- bzw. Bedienungsseite des Gehäuses 10 sind wasserdicht und salzwasserbeständig das Flüssigkristall-Display 3 und ein Block Folientastelemente 9 eingebaut. Das Flüssigkristall-Display 3 besitzt eine graphische Druckverlaufsdarstellung 17 mit der Druck-Koordinate Y und Zeit-Koordinate X. Die Druckverlaufskurve kann aber auch auf einem Raster mit 12 senkrechten und 10 horizontalen Linien dargestellt sein. Das Flüssigkristall-Display 3 weist vorzugsweise 256×128 Bildpunkte auf. Die Druckverlaufskurve endet jeweils in einem blinkenden Pfeil 18, der die Aufzeichnungsrichtung anzeigt und durch sein Blinken angibt, ob das Gerät arbeitet. Im Flüssigkristall-Display 3 sind außerdem sechs Anzeigefelder 11 bis 16 zur digitalen Anzeige des Datums 11, der Uhrzeit 12, des atmosphärischen Druckes 13, der zu erwartenden Windgeschwindigkeit 14 ab einer bestimmten Druckrate, der eingestellten geographischen Breite 15 und der Temperatur 16 vorhanden. Die Reihenfolge der Anzeigefelder 11 bis 16 kann aber auch anders sein und es können auch noch weitere Anzeigefelder vorhanden sein. Je nach Verwendungszweck, als Druckschreiber auf Schiffen oder als Höhenmesser, wird man die eine oder andere Ausführung wählen.

Auch die Anordnung der Folientastelemente 9 und ihre Funktionen sind nur beispielhaft angeführt. Ein Ziffernblock und Schalt- oder Tastelemente zum Einstellen und Abrufen des Mikroprozessors 2 werden jedoch immer vorhanden sein.

**Patentansprüche**

1. Elektronischer Druckschreiber, insbesondere Atmosphären-Druckschreiber, für die Verwendung auf Schiffen, mit einem an den Eingang eines Mikroprozessors angeschlossenen, druckäquivalente elektrische Impulse liefernden Geberelement, dadurch gekennzeichnet, daß der Mikroprozessor (2) neben einer an sich bekannten Zeit-Einheit (8) eine Speicher-Einheit aufweist, in der ein Kalender abgespeichert ist und die eine vorbestimmte Dauer die gemessenen Druckwerte speichert sowie ein zusätzliches Speichervermögen für beispielsweise geographische und bzw. oder meteorologische Daten besitzt, die Ausgänge (4, 7) des Mikroprozessors (2) mit einem Flüssigkristall-Display (3) zur digitalen Druckanzeige und graphischen Druckverlaufsdarstellung, sowie mit einer optischen und bzw. oder akustischen Warneinrichtung verbunden sind, welche anspricht, wenn die Druckrate des Druckabfalles einen vorbestimmten Wert zwischen 0,5 und 5 mb/Stunde übersteigt, und daß die Zeit-Einheit (8) sowie die Speicher-Einheit vorzugsweise über Folientastelemente (9) einstell- und bzw. oder abrufbar ist.

2. Elektronischer Druckschreiber nach Anspruch 1, dadurch gekennzeichnet, daß ein Ausgang (7) des Mikroprozessors (2) mit einem Plotter zur Aufzeichnung des Druckverlaufes verbindbar ist.

3. Elektronischer Druckschreiber nach Anspruch 1 oder 2, dadurch gekennzeichnet, daß Geberelemente (1, 5, 6), Mikroprozessor (2), Flüssigkristall-Display (3) und Warneinrichtung in einem wasserdichten und salzwasserbeständigen Gehäuse (10) angeordnet sind, das zum Aufstellen oder zur Befestigung an einer Wand oder einbaubar ausgeführt ist.

4. Elektronischer Druckschreiber nach einem der Ansprüche 1 bis 3, dadurch gekennzeichnet, daß die Koordinaten der graphischen Druckverlaufsdarstellung durch am Gehäuse (10) befindliche Folientastelemente (9) veränderbar sind.

5. Elektronischer Druckschreiber nach einem der Ansprüche 1 bis 4, dadurch gekennzeichnet, daß das Flüssigkristall-Display (3) eine digitale Anzeige jener Windgeschwindigkeit aufweist, die auf Grund des Druckverlaufes und der geographischen Breite des Meßortes zu erwarten ist.

6. Elektronischer Druckschreiber nach einem der Ansprüche 1 bis 5, dadurch gekennzeichnet, daß der Mikroprozessor (2) und das Flüssigkristall-Display (3) zusätzlich für die digitale Anzeige der Temperatur, tatsächlichen Windgeschwindigkeit, Windrichtung und Schiffsgeschwindigkeit ausgerüstet sind.

7. Elektronischer Druckschreiber nach einem der Ansprüche 1 bis 6, dadurch gekennzeichnet, daß der Mikroprozessor (2) und das Flüssigkristall-Display (3) zur digitalen Anzeige der geographischen Breite und Länge mit einem Navigationsgerät gekoppelt sind.

**Claims**

1. Electronic pressure recorder, in particular an atmospheric pressure recorder for use on board ship, with a sensor element connected to the input of a microprocessor and supplying pressure-equivalent electrical pulses, characterized in that the microprocessor (2) has, in addition to a conventional clock unit (8), a memory unit in which a calendar is stored, and which stores the measured pressure values for a predetermined length of time, as well as having an additional storage capacity to store, for example, for geographical and/or meteorological data, the outputs (4, 7) of the microprocessor (2) are connected to a liquid crystal display (3) for digital pressure display and graphic representation of the variation in the pressure, as well as with a visual and/or acoustic warning device which is actuated if the pressure rate of the pressure drop exceeds a predetermined value between 0,5 and 5 mb/hour, and in that the clock unit (8) and the memory unit can be set and/or called up, preferably by means of membrane keyboard elements (9).

2. Electronic pressure recorder according to Claim 1, characterized in that an output (7) of the microprocessor (2) can be connected to a plotter in order to record the variation in pressure.

3. Electronic pressure recorder according to Claim 1 or 2, characterized in that the sensor elements (1, 5, 6), the microprocessor (2), the liquid crystal display (3) and the warning device are arranged in a watertight and salt-water resistant housing (10), designed to be set up or fastened on a wall or installed.

4. Electronic pressure recorder according to one of the Claims 1 to 3, characterized in that the co-ordinates of the graphic representation of the variation in pressure can be changed by means of membrane keyboard elements (9) located on the housing (10).

5. Electronic pressure recorder according to one of the Claims 1 to 4, characterized in that the liquid crystal display (3) has a digital display of the wind speed which can be expected on the basis of the variation in peressure and the latitude of the measurement location.

6. Electronic pressure recorder according to one of the Claims 1 to 5, characterized in that the microprocessor (2) and the liquid crystal display (3) are additionally equipped to provide a digital display of the temperature, actual wind speed, wind direction, and speed of the ship.

7. Electronic pressure recorder according to one of the Claims 1 to 6, characterized in that the microprocessor (2) and the liquid crystal display (3) are connected to a navigational instrument to provide a digital display of the geographical latitude and longitude.

**Revendications**

1. Enregistreur électronique de pression, en particulier enregistreur de pression atmosphérique, pour l'utilisation sur un navire, comprenant un capteur fournissant des impulsions électriques équivalentes à la pression connectée à l'entrée d'un microprocesseur caractérisé en ce que le microprocesseur (2) comprend, à côté d'une unité d'horloge (8) connue en soi, une unité de mémoire, dans laquelle un calendrier est mémorisé et qui mémorise les valeurs de pression mesurées pendant une durée prédéterminée et qu'il possède aussi une possibilité supplémentaire de mémoire pour des données par exemple géographiques ou météorologiques, les sorties du microprocesseur étant reliées à un écran (3) à cristaux liquides pour l'indication numérique de la pression et la représentation graphique de l'évolution de la pression, ainsi qu'à un dispositif d'alarme optique et/ou acoustique qui fonctionne lorsque le taux de variation de la chute de pression dépasse une valeur prédéterminée comprise entre 0,5 et 5 mb/heure, l'unité d'horloge (8) ainsi que l'unité de mémoire étant de préférence enclenchables et mis en route par un clavier (9).

2. Enregistreur électronique de pression selon la revendication 1, caractérisé en ce qu'une sortie (7) du microprocesseur (2) est reliée à un traceur pour la représentation graphique de la courbe de pression.

3. Enregistreur électronique de pression selon l'une des revendications 1 et 2, caractérisé en ce que le capteur (1, 5, 6) le microprocesseur (2), l'écran (3) de visualisation à cristaux liquides et le dispositif d'alarme sont placés dans un boîtier étanche à l'eau et résistant à l'eau de mer, qui est réalisé pour être placé ou fixé sur un mur ou encastrable.

4. Enregistreur électronique de pression selon l'une des revendications 1 à 3, caractérisé en ce que les coordonnées de la représentation graphique de la courbe de pression sont modifiables grâce au clavier (9) se trouvant sur le boîtier (10).

5. Enregistreur électronique de pression selon l'une des revendications 1 à 4, caractérisé en ce que l'écran (3) à cristaux liquides comprend un indicateur numérique de la vitesse du vent à attendre en fonction de la courbe de pression et de la latitude du lieu de mesure.

6. Enregistreur électronique de pression selon l'une des revendications 1 à 5, caractérisé en ce que le microprocesseur (2) et l'écran à cristaux liquides (3) sont également équipés pour l'indication numérique de la température, de la vitesse réelle du vent, de la direction du vent et de la vitesse du navire.

7. Enregistreur électronique de pression selon l'une des revendications 1 à 6, caractérisé en ce que le microprocesseur (2) et l'écran (3) à cristaux liquides sont couplés à un appareil de navigation par l'indication numérique de la latitude et de la longitude.

Fig 1

Fig. 2